# EUROPEAN PATENT APPLICATION

(11) **EP 4 303 356 A1**
(43) Date of publication of application: **10.01.2024**
(21) Application number: 21929245.5
(22) Date of filing: 24.12.2021
(51) Int. Cl.: D06N 3/14, B32B 27/40

(54) **SYNTHETIC LEATHER**

(30) Priority: 03.03.2021 JP 2021033831
(71) Applicant: Seiren Co., Ltd., Fukui-shi Fukui 918-8560 (JP)
(72) Inventor: NABATA, Yasuki, Fukui-shi, Fukui 918-8560 (JP); KATO, Yoshiharu, Fukui-shi, Fukui 918-8560 (JP)
(74) Representative: Dolleymores
(86) International application number: PCT/JP2021/048261
(87) International publication number: WO 2022/185689

(57) **Abstract**

A synthetic leather according to an embodiment includes: a fibrous substrate; an adhesive layer containing a yellowing-resistant polycarbonate-based polyurethane resin and/or a yellowing polycarbonate-based polyurethane resin; and a skin layer that contains a yellowing-resistant polycarbonate-based polyurethane resin and that is laminated on the fibrous substrate via the adhesive layer. The synthetic leather has excellent oleic acid resistance.

## Description

### Technical Field

The present invention relates to a synthetic leather. More specifically, the invention relates to a synthetic leather having excellent oleic acid resistance.

### Background Art

In the related art, a synthetic leather has been used in various fields such as vehicle interior material applications such as a vehicle seat and a door lining, interior material applications such as furniture and chairs, and fashion applications such as bags and shoes. Among them, vehicle interior materials are to be used under severe conditions and are thus required to have high durability. Among them, in a case of a vehicle seat, a steering wheel, and the like, which frequently come into direct contact with a human body, there is a strong demand for durability against sebum secreted from the human body, especially against oleic acid, which is a main component of sebum.

For example, PTL 1 discloses a synthetic leather in which a polyurethane resin skin layer is laminated on a surface of a fiber substrate via a polyurethane resin adhesive layer. PTL 1 discloses that a silicone-modified non-yellowing polycarbonate-based polyurethane resin is used as a polyurethane resin for forming the skin layer, and accordingly, oleic acid resistance required for vehicle interior materials can be satisfied.

### Citation List

### Patent Literature

PTL 1: JPH09-31862A

### Summary of Invention

### Technical Problem

However, the synthetic leather disclosed in PTL 1 has room for improvement in applications in which higher oleic acid resistance is required. Examples of such applications include applications of parts of vehicle interior materials that are frequently touched by a human body, especially hands, such as a steering wheel, a shift lever, and an armrest.

The invention has been made in view of the above circumstances, and an object of the invention is to provide a synthetic leather having excellent oleic acid resistance.

### Solution to Problem

A synthetic leather according to an embodiment of the invention includes: a fibrous substrate; an adhesive layer containing a yellowing-resistant polycarbonate-based polyurethane resin and/or a yellowing polycarbonate-based polyurethane resin; and a skin layer that contains a yellowing-resistant polycarbonate-based polyurethane resin and that is laminated on the fibrous substrate via the adhesive layer.

### Advantageous Effects of Invention

According to the embodiment of the invention, it is possible to provide a synthetic leather having excellent oleic acid resistance.

### Brief Description of Drawings

[FIG. 1] FIG. 1 is a schematic cross-sectional view of a synthetic leather according to one embodiment.
[FIG. 2] FIG. 2 is a schematic cross-sectional view of a synthetic leather according to another embodiment.
[FIG. 3] FIG. 3 is a schematic cross-sectional view of a synthetic leather according to another embodiment.

### Description of Embodiments

A synthetic leather according to the present embodiment is formed by laminating an adhesive layer and a skin layer on a fibrous substrate. The skin layer contains a yellowing-resistant polycarbonate-based polyurethane resin. The adhesive layer contains a yellowing-resistant polycarbonate-based polyurethane resin and/or a yellowing polycarbonate-based polyurethane resin. When the skin layer and the adhesive layer contain such a polyurethane resin, an intermolecular interaction (hydrogen bonding, van der Waals force, π-π stacking interaction) of the polyurethane resin is increased, and a gap between molecules is reduced. More specifically, a polycarbonate-based resin has intramolecular polarization stronger than that of a polyether-based resin or a polyester-based resin. In addition, a yellowing-resistant resin and a yellowing resin have an aromatic structure, and an intermolecular force acts due to an interaction of π electrons between aromatic rings. Therefore, it is considered that the intermolecular interaction of the polyurethane resin is increased. Therefore, penetration of oleic acid can be prevented, and oleic acid resistance can be improved. In addition, an intermolecular interaction of the polyurethane resin is also increased at an interface between the skin layer and the adhesive layer, and for the same reason as above, the oleic acid resistance can be improved.

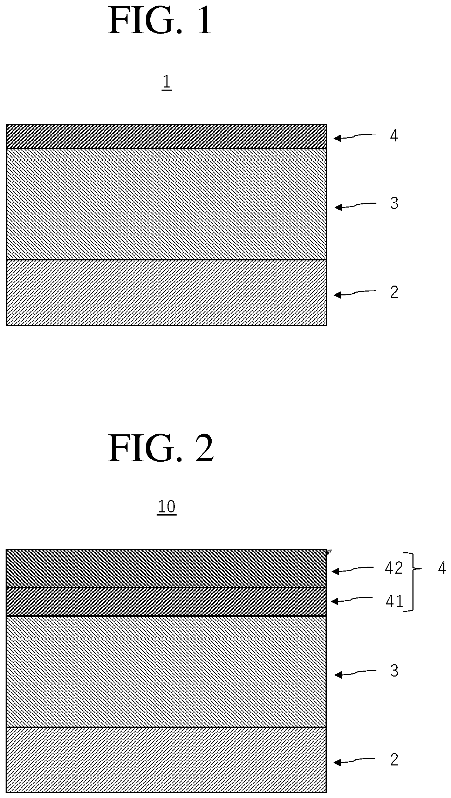

FIG. 1 schematically shows a cross-sectional structure of a synthetic leather 1 according to one embodiment. In the synthetic leather 1, a skin layer 4 is directly laminated on one surface of a fibrous substrate 2 via an adhesive layer 3. Therefore, the adhesive layer 3 and the skin layer 4 are laminated in this order on the one surface of the fibrous substrate 2.

FIG. 2 schematically shows a cross-sectional structure of a synthetic leather 10 according to another embodiment. The synthetic leather 10 differs from the synthetic leather 1 in FIG. 1 in that the skin layer 4 has a two-layer structure. Therefore, in an example in FIG. 2, the adhesive layer 3, a skin layer 41, and a skin layer 42 are laminated in this order on one surface of the fibrous substrate 2.

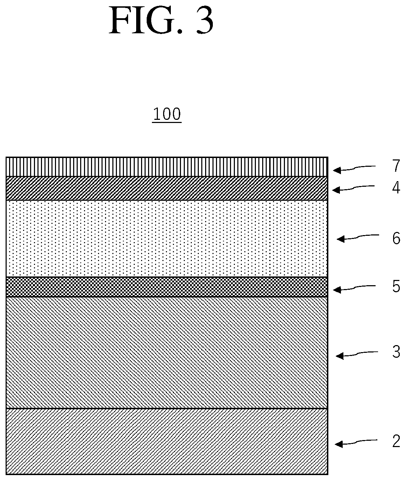

FIG. 3 schematically shows a cross-sectional structure of a synthetic leather 100 according to another embodiment. In the synthetic leather 100, an anchor coat layer 5 and a foam layer 6 are provided between the adhesive layer 3 and the skin layer 4, and a protective layer 7 is provided on the skin layer 4. Therefore, in an example in FIG. 3, the adhesive layer 3, the anchor coat layer 5, the foam layer 6, the skin layer 4, and the protective layer 7 are laminated in this order on one surface of the fibrous substrate 2.

In the examples in FIGS. 1 to 3, a front surface of the synthetic leather is flat, and may be provided with unevenness in consideration of a design. Here, the front surface of the synthetic leather refers to, of front and back surfaces of the synthetic leather, a surface (design surface) that is visible when in use.

In the present embodiment, the fibrous substrate is not particularly limited, and examples thereof include fabrics such as woven fabrics, knitted fabrics, and non-woven fabrics, and leathers (including a split leather). Among them, from the viewpoint of good sewability of the obtained synthetic leather, knitted fabrics or woven fabrics are preferred, and knitted fabrics are more preferred. As the fabrics, a fabric obtained by applying or impregnating a solvent-based or solvent-free (including water-based) polymer compound known in the related art (for example, a polyurethane resin or a copolymer thereof, and a polyvinyl chloride resin), and performing dry solidification or wet solidification may be used. The fibrous substrate may be colored with a dye or a pigment.

A thickness of the fibrous substrate is not particularly limited, and is preferably 0.9 mm to 1.3 mm and more preferably 1.0 mm to 1.2 mm, from the viewpoint of abrasion resistance, strength, and tactile feeling. The thickness of the fibrous substrate is a thickness of the fibrous substrate before the adhesive layer and the skin layer are laminated, and a thickness of the fibrous substrate in the synthetic leather after lamination may be set within the same range.

The synthetic leather according to the present embodiment is formed by laminating, on the fibrous substrate, the adhesive layer containing a yellowing-resistant polycarbonate-based polyurethane resin and/or a yellowing polycarbonate-based polyurethane resin and the skin layer containing a yellowing-resistant polycarbonate-based polyurethane resin as resin layers.

Here, the yellowing-resistant polycarbonate-based polyurethane resin and the yellowing polycarbonate-based polyurethane resin are polycarbonate-based polyurethane resins having an aromatic ring in a molecule, and are different from a non-yellowing polycarbonate-based polyurethane resin having no aromatic ring.

Examples of the yellowing-resistant polycarbonate-based polyurethane resin include the following (A1) and (A2).
(A1) one obtained by a reaction of a polycarbonate polyol component with a yellowing-resistant polyisocyanate component,
(A2) one obtained by a reaction of a polycarbonate polyol with a yellowing polyisocyanate component and containing an ultraviolet absorbing agent and/or a light stabilizer

The yellowing-resistant polycarbonate-based polyurethane resin may contain another polyol component or another polyisocyanate component as a copolymerization component as long as an effect thereof is not impaired.

Examples of the yellowing polycarbonate-based polyurethane resin include (B) one obtained by a reaction of a polycarbonate polyol component with a yellowing polyisocyanate component and containing no ultraviolet absorbing agent and/or light stabilizer. The yellowing polycarbonate-based polyurethane resin may contain another polyol component or another polyisocyanate component as a copolymerization component as long as an effect thereof is not impaired.

Examples of the polycarbonate polyol component include at least one polyalkylene carbonate diol selected from the group consisting of a polyethylene carbonate diol, a polybutylene carbonate diol, and a polyhexamethylene carbonate diol.

As the yellowing-resistant polyisocyanate component, an araliphatic polyisocyanate is used. The araliphatic polyisocyanate is a polyisocyanate in which an isocyanate group is not directly bonded to an aromatic ring. Examples thereof include araliphatic diisocyanates such as xylylene diisocyanate (XDI) and tetramethylxylylene diisocyanate (TMXDI), and these may be used alone or in combination of two.

As the yellowing polyisocyanate component, an aromatic polyisocyanate is used. The aromatic polyisocyanate is a polyisocyanate in which an isocyanate group is directly bonded to an aromatic ring. Examples thereof include aromatic diisocyanates such as phenylene diisocyanate, toluene diisocyanate (TDI), 4,4'- or 2,4'-diphenylmethane diisocyanate (MDI), and naphthalene diisocyanate, and these may be used alone or in combination of two or more. Among them, it is preferred to use TDI and/or MDI from the viewpoint of improving the oleic acid resistance.

Examples of the ultraviolet absorbing agent include "Tinuvin 326" and "Tinuvin 400" (both manufactured by BASF Japan Ltd.).

Examples of the light stabilizer include "Tinuvin 144" and "Tinuvin 5866" (both manufactured by BASF Japan Ltd.).

Examples of the yellowing-resistant polycarbonate-based polyurethane resin (A1) include one obtained by reacting a polycarbonate polyol component, a yellowing-resistant polyisocyanate component, and a low-molecular-weight chain extender. In addition, the yellowing-resistant polycarbonate-based polyurethane resin (A1) may be one obtained by reacting a urethane polycarbonate polyol prepolymer, obtained by a reaction between a polycarbonate polyol component and a yellowing-resistant polyisocyanate component, with a yellowing-resistant polyisocyanate component (urethane curing agent). Further, the yellowing-resistant polycarbonate-based polyurethane resin (A1) may be one obtained by reacting a yellowing-resistant urethane polyisocyanate prepolymer, obtained by a reaction between a polycarbonate polyol component and a yellowing-resistant polyisocyanate component, with a polycarbonate polyol component.

Examples of the yellowing-resistant polycarbonate-based polyurethane resin (A2) include one obtained by adding an ultraviolet absorbing agent or a light stabilizer in addition to a polycarbonate polyol component, a yellowing polyisocyanate component, and a low-molecular-weight chain extender, and allowing these components to react with each other. In addition, the yellowing-resistant polycarbonate-based polyurethane resin (A2) may be one obtained by adding an ultraviolet absorbing agent or a light stabilizer in addition to a urethane polycarbonate polyol prepolymer obtained by reacting a polycarbonate polyol component with a yellowing polyisocyanate component, and a yellowing polyisocyanate component (urethane curing agent), and allowing these components to react with each other. Further, the yellowing-resistant polycarbonate-based polyurethane resin (A2) may be one obtained by adding an ultraviolet absorbing agent or a light stabilizer in addition to a yellowing urethane polyisocyanate prepolymer obtained by reacting a polycarbonate polyol component with a yellowing polyisocyanate component, and a polycarbonate polyol component, and allowing these components to react with each other.

Examples of the yellowing polycarbonate-based polyurethane resin (B) include one obtained by reacting a polycarbonate polyol component, a yellowing polyisocyanate component, and a low-molecular-weight chain extending agent. In addition, the yellowing polycarbonate-based polyurethane resin (B) may be one obtained by reacting a urethane polycarbonate polyol prepolymer, obtained by a reaction between a polycarbonate polyol component and a yellowing polyisocyanate component, with a yellowing polyisocyanate component (urethane curing agent). Further, the yellowing polycarbonate-based polyurethane resin (B) may be one obtained by reacting a yellowing urethane polyisocyanate prepolymer, obtained by a reaction between a polycarbonate polyol component and a yellowing polyisocyanate component, with a polycarbonate polyol component.

Examples of the low-molecular-weight chain extending agent include a compound having at least two active hydrogen atoms, and examples thereof include at least one selected from the group consisting of an aliphatic diol, an alicyclic diol, an aliphatic diamine, an alicyclic diamine, and a hydrazine derivative.

As a resin forming the skin layer, the yellowing-resistant polycarbonate-based polyurethane resin described above is used. By using the resin, an intermolecular interaction (hydrogen bonding, van der Waals force, π-π stacking interaction) of the polyurethane resin is increased, and a gap between molecules is reduced. Therefore, the penetration of oleic acid can be prevented, and the oleic acid resistance can be improved.

A form of the yellowing-resistant polycarbonate-based polyurethane resin for the skin layer is not particularly limited, and may be appropriately selected according to an application. For example, the form may be solvent-free, hot melt-based, solvent-based, or water-based, and may be one-component type or two-component curing type. From the viewpoint of film-forming properties, a solvent-based one-component type is preferred.

The skin layer is formed of a resin containing a yellowing-resistant polycarbonate-based polyurethane resin as a main component. The resin forming the skin layer may be only the yellowing-resistant polycarbonate-based polyurethane resin, or may contain a resin such as another polyurethane resin as long as an effect thereof is not impaired. For example, it is preferred that 60% by mass or more, more preferably 80% by mass or more of the resin forming the skin layer is the yellowing-resistant polycarbonate-based polyurethane resin.

The skin layer may contain additives such as a crosslinking agent and a colorant as necessary. The crosslinking agent is incorporated into the resin through a reaction to form a crosslinked structure. Examples of the crosslinking agent can include an isocyanate-based crosslinking agent and a carbodiimide-based crosslinking agent. Among them, an isocyanate-based crosslinking agent is preferred. Since a crosslinking density of the resin can be increased by adding the isocyanate-based crosslinking agent, the oleic acid resistance is improved. In addition, ethanol resistance can also be imparted.

Examples of the isocyanate-based crosslinking agent include an aromatic polyisocyanate such as phenylene diisocyanate, TDI, MDI, and naphthalene diisocyanate, an araliphatic polyisocyanate such as XDI and TMXDI, and an aliphatic polyisocyanate or an alicyclic polyisocyanate such as hexamethylene diisocyanate (HDI), lysine diisocyanate, cyclohexane diisocyanate, isophorone diisocyanate (IPDI), and dicyclohexylmethane diisocyanate. Among them, it is preferred to use at least one selected from the group consisting of an aliphatic diisocyanate, an alicyclic diisocyanate, and an araliphatic diisocyanate from the viewpoint of yellowing resistance. It is preferred to use at least one selected from the group consisting of an aromatic diisocyanate and an araliphatic diisocyanate from the viewpoint of the oleic acid resistance and the ethanol resistance.

A content of the isocyanate-based crosslinking agent in the skin layer is not particularly limited, and may be, for example, 0.1% by mass to 15% by mass, 1% by mass to 10% by mass, or 3% by mass to 10% by mass in terms of solid content in a skin layer resin composition for forming the skin layer. When the content of the isocyanate-based crosslinking agent is 15% by mass or less, it is possible to prevent a texture from becoming rough and hard.

The colorant is not particularly limited, and pigments and dyes known in the related art, and the like can be exemplified. By adding the colorant, a design property can be improved. A content of the colorant in the skin layer is not particularly limited, and is, for example, preferably 20% by mass to 38% by mass, more preferably 25% by mass to 35% by mass, and still more preferably 28% by mass to 32% by mass in terms of solid content in the skin layer resin composition. When the content of the colorant is 20% by mass or more, a surface color of the synthetic leather to be obtained becomes dark, and the polyurethane resin can be prevented from being discolored due to heat or light. When the content of the colorant is 38% by mass or less, a fastness to rubbing is not impaired.

In the present embodiment, the skin layer may be formed with one layer, or may be formed with two or more layers. In FIG. 2, the skin layer is formed with two layers. In this case, a form of a yellowing-resistant polycarbonate-based polyurethane resin for forming a first skin layer (skin layer 42) on a front surface side is preferably a solvent-based one-component type from the viewpoint of film-forming properties. A form of a yellowing-resistant polycarbonate-based polyurethane resin for forming a second skin layer (skin layer 41) on an adhesive layer side is preferably a water-based one-component type from the viewpoint that an environmental load is small and the first skin layer is less likely to be dissolved during lamination (during recoating of a resin liquid), and is preferably a solvent-based one-component type from the viewpoint of film-forming properties.

The skin layer may be formed with three or more layers. In this case, a form of a yellowing-resistant polycarbonate-based polyurethane resin for forming a first skin layer is preferably a solvent-based one-component type from the viewpoint of film-forming properties. A form of a yellowing-resistant polycarbonate-based polyurethane resin for forming a skin layer in contact with the adhesive layer is preferably a water-based one-component type from the viewpoint that an environmental load is small and the existing layer is less likely to be dissolved during lamination (during recoating), and is preferably a solvent-based one-component type from the viewpoint of film-forming properties. A form of a yellowing-resistant polycarbonate-based polyurethane resin for forming a skin layer present between the first skin layer and the skin layer in contact with the adhesive layer may be the same as that of the "skin layer in contact with the adhesive layer", that is, solvent-based and water-based may be selected according to the purpose.

In addition, when the skin layer has two or more layers, the contents of the crosslinking agent and the colorant in the above-described skin layer may satisfy the above-described numerical range in a skin layer (skin layer 42 in FIG. 2) which is the outermost layer or a skin layer which is in contact with a protective layer.

In one embodiment, a thickness of the skin layer is preferably 17 µm to 80 µm, more preferably 20 µm to 70 µm, and still more preferably 25 µm to 60 µm. When the thickness is 17 µm or more, an effect of improving the oleic acid resistance can be enhanced. When the thickness is 80 µm or less, it is possible to prevent the texture of the synthetic leather to be obtained from becoming rough and hard. When the skin layer is formed with a plurality of layers, a total thickness of the plurality of skin layers may satisfy the above-described numerical range.

As a resin forming the adhesive layer, one or both of the yellowing-resistant polycarbonate-based polyurethane resin and the yellowing polycarbonate-based polyurethane resin described above are used. By using the resin, an intermolecular interaction (hydrogen bonding, van der Waals force, π-π stacking interaction) of the polyurethane resin is increased, and a gap between molecules is reduced. Therefore, the penetration of oleic acid can be prevented, and the oleic acid resistance can be improved. In addition, by using the yellowing-resistant polycarbonate-based polyurethane resin for the skin layer and the yellowing-resistant polycarbonate-based polyurethane resin and/or the yellowing polycarbonate-based polyurethane resin for the adhesive layer, the skin layer and the adhesive layer have an aromatic structure. Therefore, an intermolecular interaction of the polyurethane resin is also increased at an interface between the skin layer and the adhesive layer, and for the same reason as above, the oleic acid resistance can be improved.

A form of the yellowing-resistant polycarbonate-based polyurethane resin for the adhesive layer is not particularly limited, and may be appropriately selected according to an application. For example, the form may be solvent-free, hot melt-based, solvent-based, or water-based, and may be one-component type or two-component curing type. From the viewpoint of adhesion between the skin layer and the fibrous substrate, a solvent-based two-component curing type is preferred.

The adhesive layer is formed of a resin containing a yellowing-resistant polycarbonate-based polyurethane resin and/or a yellowing polycarbonate-based polyurethane resin as a main component. The resin forming the adhesive layer may be only the yellowing-resistant polycarbonate-based polyurethane resin and/or the yellowing polycarbonate-based polyurethane resin alone, and may contain a resin such as another polyurethane resin as long as an effect thereof is not impaired. For example, it is preferred that 60% by mass or more, more preferably 80% by mass or more of the resin forming the adhesive layer is the yellowing-resistant polycarbonate-based polyurethane resin and/or the yellowing polycarbonate-based polyurethane resin.

The adhesive layer may contain additives such as a crosslinking agent, a colorant, a catalyst, and a flame retardant as necessary. Examples of the crosslinking agent include an isocyanate-based crosslinking agent and a carbodiimide-based crosslinking agent. Examples of the colorant include a pigment and a dye. Examples of the catalyst include an amine catalyst and an organic tin compound.

In one embodiment, a thickness of the adhesive layer is preferably 100 µm to 200 µm, and more preferably 145 µm to 195 µm. When the thickness is 100 µm or more, the oleic acid resistance is good, and the fibrous substrate can be concealed to provide a good design property. When the thickness is 200 µm or less, it is possible to prevent the texture of the synthetic leather to be obtained from becoming rough and hard.

The thickness of the adhesive layer is preferably larger than the thickness of the skin layer. Accordingly, the texture becomes good. In addition, the thickness of the adhesive layer is preferably larger than a thickness of a foam layer, and preferably larger than a thickness of an anchor coat layer. Accordingly, the texture becomes good.

Although not particularly limited, the adhesive layer is preferably a non-porous layer. Regarding other resin layers, the resin layers other than the foam layer, that is, the skin layer, the anchor coat layer, and the protective layer, are all preferably non-porous layers.

In the present embodiment, between the skin layer and the adhesive layer, a foam layer may be provided, or a foam layer and an anchor coat layer may be provided as necessary.

The foam layer is laminated on a back surface of the skin layer (that is, below the skin layer). The foam layer is a layer provided to increase the thickness of the resin layers in the synthetic leather, thereby making the oleic acid less likely to penetrate and further improving the oleic acid resistance. Since it is a foam layer, even if the thickness of the resin layers is large, the texture is not impaired. In addition, by providing the foam layer, it is also possible to impart a cool/hot feeling during contact.

The anchor coat layer is provided between the foam layer and the adhesive layer. That is, the anchor coat layer is laminated on a back surface of the foam layer (that is, below the foam layer), and is a layer provided to enhance adhesion between the foam layer and the adhesive layer.

The foam layer and the anchor coat layer preferably contain a polyurethane resin from the viewpoint of improving the adhesion. The polyurethane resin contained in the foam layer and the anchor coat layer is preferably a polycarbonate-based polyurethane resin. It is more preferred to use the polyurethane resin same as that in the skin layer. That is, from the viewpoint of improving the oleic acid resistance, the foam layer and the anchor coat layer preferably contain a yellowing-resistant polycarbonate-based polyurethane resin, and similar to the skin layer, the foam layer and the anchor coat layer are preferably formed of a resin containing a yellowing-resistant polycarbonate-based polyurethane resin as a main component. By using a yellowing-resistant polycarbonate-based polyurethane resin, an intermolecular interaction (hydrogen bonding, van der Waals force, π-π stacking interaction) of the polyurethane resin is increased, and a gap between molecules is reduced. Therefore, the penetration of oleic acid can be prevented, and the oleic acid resistance can be improved. In addition, an intermolecular interaction of the polyurethane resin is also increased at an interface of respective layer, and for the same reason as above, the oleic acid resistance can be improved.

A form of the yellowing-resistant polycarbonate-based polyurethane resin used for the foam layer and the anchor coat layer is not particularly limited, and may be appropriately selected according to an application. For example, the form may be solvent-free, hot melt-based, solvent-based, or water-based, and may be one-component type or two-component curing type. Considering a preferred mode of hollow fine particles (hollow fine particles having an outer shell formed of a thermoplastic resin) to be added to the foam layer, which will be described later, a water-based one-component type is preferred.

In addition to the resin, additives such as a foaming agent, hollow fine particles, a crosslinking agent, a leveling agent, a thickener, a pH adjusting agent, an antifoaming agent, and a colorant can be used for the foam layer and the anchor coat layer as necessary. Examples of the crosslinking agent include an isocyanate-based crosslinking agent and a carbodiimide-based crosslinking agent. As the isocyanate-based crosslinking agent, it is preferred to use at least one selected from the group consisting of an aliphatic diisocyanate, an alicyclic diisocyanate, and an araliphatic diisocyanate, similar to the skin layer.

A means for forming pores in the foam layer is not particularly limited, and a known method can be adopted. Examples thereof include physical foaming by mechanical stirring, chemical foaming by adding a foaming agent, and foaming (forming closed pores) by adding hollow fine particles. Alternatively, closed pores may be formed by coating a surface of the layer with a non-porous layer after forming pores by wet coating of a polyurethane resin. From the viewpoint that a shape or a size of pores and a foaming magnification can be easily adjusted, it is preferred to form pores by adding hollow fine particles.

Hollow fine particles refer to spherical particles whose interior microscopic voids are covered with a film (called an outer shell, outer wall, and the like) formed of various materials. Among them, it is preferred to use particles that do not expand in volume even when subjected to a heat treatment. By using such hollow fine particles, it is possible to minimize a volume fluctuation of the foam layer during production, reduce a variation in quality, prevent the resin around the hollow fine particles from being stretched and thinned, and prevent the oleic acid resistance from being impaired.

As the hollow fine particles, various fine particles satisfying the above conditions can be used. Examples thereof include organic hollow fine particles having an outer shell formed of a thermosetting resin such as a phenol resin, an epoxy resin, or a urea resin, or a thermoplastic resin such as an acrylic resin or a vinyl chloride resin. Alternatively, examples thereof include inorganic hollow fine particles having an outer shell formed of glass, shirasu, silica, alumina, or carbon. In addition, organic hollow fine particles having a surface coated with inorganic fine powders such as calcium carbonate, talc, or titanium oxide can also be used. Among them, from the viewpoint of heat resistance, abrasion resistance, and strength, organic hollow fine particles having an outer shell formed of a thermoplastic resin or organic hollow fine particles having a surface coated with inorganic fine powders are preferred.

The hollow fine particles having the outer shell formed of the thermoplastic resin used as a preferred embodiment are typically obtained by foaming a microcapsule-type foaming agent in advance. The microcapsule-type foaming agent itself contains a volatile foaming agent such as a low boiling point hydrocarbon in an outer shell formed of a thermoplastic resin which is softened and expandable by a heat treatment. As one embodiment, the microcapsule-type foaming agent may be used as it is, or may be used as a foamed body obtained by foaming in advance. Among them, a foamed body is preferred from the viewpoint of heat resistance.

A thickness of the foam layer is preferably 70 µm to 170 µm in one embodiment. When the thickness is 70 µm or more, the oleic acid resistance can be good. When the thickness is 170 µm or less, processability can be good.

A thickness of the anchor coat layer is preferably 17 µm to 27 µm in one embodiment. When the thickness is 17 µm or more, it is possible to prevent the outer shell of the hollow fine particles in the foam layer from being dissolved by a solvent in the adhesive layer. When the thickness is 27 µm or less, it is possible to prevent the texture from becoming rough and hard.

In the present embodiment, a protective layer may be further provided on the skin layer. By providing the protective layer on the skin layer, the abrasion resistance of the synthetic leather to be obtained can be improved. The protective layer preferably contains a polycarbonate-based polyurethane resin.

A form of the polycarbonate-based polyurethane resin for the protective layer is not particularly limited, and may be appropriately selected according to an application. For example, the form may be solvent-free, hot melt-based, solvent-based, or water-based, and may be one-component type or two-component curing type. From the viewpoint of abrasion resistance, texture, and tactile feeling, a water-based one-component type is preferred.

The polycarbonate-based polyurethane resin forming the protective layer is obtained by, for example, reacting a polycarbonate polyol component, a polyisocyanate component, and a low-molecular-weight chain extender.

Here, as the polycarbonate polyol component, for example, at least one polyalkylene carbonate diol selected from the group consisting of a polyethylene carbonate diol, a polybutylene carbonate diol, and a polyhexamethylene carbonate diol can be used.

As the polyisocyanate component, for example, at least one organic polyisocyanate selected from the group consisting of an aliphatic polyisocyanate, an alicyclic polyisocyanate, an araliphatic polyisocyanate, and an aromatic polyisocyanate can be used. From the viewpoint of abrasion resistance and light resistance, at least one selected from the group consisting of an aliphatic diisocyanate, an alicyclic diisocyanate, and an araliphatic diisocyanate is preferred. Among them, it is preferred to use at least one selected from the group consisting of HDI, XDI, and IPDI.

In addition, examples of the low-molecular-weight chain extender include a compound having at least two active hydrogen atoms, and examples thereof include at least one selected from the group consisting of an aliphatic diol, an alicyclic diol, an aliphatic diamine, an alicyclic diamine, and a hydrazine derivative.

The protective layer may contain a resin other than the polycarbonate-based polyurethane resin, and may contain additives such as a crosslinking agent, a leveling agent, a matting agent, and a colorant in addition to the resin as necessary. Examples of the crosslinking agent include an isocyanate-based crosslinking agent and a carbodiimide-based crosslinking agent. As the isocyanate-based crosslinking agent, an aliphatic polyisocyanate and/or an alicyclic polyisocyanate is preferred. Examples of the matting agent include inorganic particles such as silica. When a matting agent is added to the protective layer, a content of the matting agent in the protective layer is not particularly limited, and may be 3% by mass to 40% by mass in terms of solid content.

A thickness of the protective layer is preferably 6 µm to 16 µm in one embodiment. When the thickness is 6 µm or more, the abrasion resistance can be good. When the thickness is 16 µm or less, it is possible to prevent the texture from becoming rough and hard.

The synthetic leather according to the present embodiment preferably has a dark surface color (that is, a color of the front surface). When the synthetic leather has a dark surface color, the yellowing-resistant polycarbonate-based polyurethane resin can be prevented from being discolored due to heat or light (made inconspicuous).

Specifically, L* in a L*a*b* color system is preferably 27 or less, and more preferably 25 or less. The L*a*b* color system is a color display method standardized by International Commission on illumination (CIE 1976) and also specified in JIS (JIS Z 8781-4:2013). The L* can be determined by measuring L* values at any three locations using an integrating sphere spectrophotometer (Color-i5, manufactured by X-Rite, Incorporated.) and calculating an average value thereof.

The skin layer and the adhesive layer of the synthetic leather are laminated, for example, by using the following method. A skin layer is formed by coating a releasable substrate with a resin liquid for forming a skin layer (skin layer resin composition) and then performing dry solidification. Thereafter, the skin layer is coated with a resin liquid for forming an adhesive layer (adhesive layer resin composition), and then the adhesive layer and the skin layer are laminated by press-bonding to one surface of a fibrous substrate while the resin liquid has a viscous property. A surface of the releasable substrate may be flat, or may have unevenness such as a grained pattern.

When a foam layer is to be provided, lamination thereof is performed, for example, by using the following method. A skin layer is formed by coating a releasable substrate with a resin liquid for forming a skin layer and then performing dry solidification. Thereafter, the skin layer is coated with a resin liquid for forming a foam layer (foam layer resin composition) and dry solidification is performed to form the skin layer and the foam layer on the releasable substrate. Thereafter, the foam layer is coated with a resin liquid for forming an adhesive layer, and then the adhesive layer, the foam layer, and the skin layer are laminated by press-bonding to one surface of the fibrous substrate while the resin liquid has a viscous property.

When an anchor coat layer is to be provided, lamination thereof is performed in the same manner as for the foam layer. That is, after a skin layer and a foam layer are formed on a releasable substrate, before a resin liquid for forming an adhesive is applied, the foam layer may be coated with a resin liquid for forming an anchor coat layer (anchor coat layer resin composition), and then dry solidification is performed to form the skin layer, the foam layer, and an anchor coat layer on a releasable substrate.

In addition, when a protective layer is to be provided, lamination thereof is performed, for example, by using the following method. An adhesive layer and a skin layer are laminated on a fibrous substrate by using the above-described method, then the skin layer is coated with a resin liquid for forming a protective layer (protective layer resin composition), and dry solidification is performed to form a protective layer.

Examples of a method of applying each resin liquid include known methods such as knife coating, roll coating, gravure coating, or spray coating. A desired amount of each resin liquid may be applied at one time, or may be applied at two or more times.

The application of the synthetic leather according to the present embodiment is not particularly limited. Examples thereof include interior material applications for various vehicles including automobile interior materials such as an automobile seat, a ceiling material, a dashboard, a door lining material, a steering wheel, a shift lever, and an armrest. In addition, other applications include interior applications such as a skin for sofas or chairs, and fashion applications such as bags and shoes.

### [Examples]

The invention will be described in more detail below with reference to Examples, and the invention is not limited to the following Examples.

Each evaluation item followed the following method.

### [Oleic Acid Resistance]

### (1) Appearance change after oleic acid treatment

A test piece having a size with a length of 100 mm and a width of 160 mm was taken. The test piece was attached to an entire surface of a mounting paper having a thickness of 1.0 mm and the same size (White Ball No. 12, manufactured by WorkUp CO., LTD.) using a double-sided tape (No. 7570, manufactured by Teraoka Seisakusho Co., Ltd.).

A paper waste cut into a length of 50 mm and a width of 120 mm (WYPALL X50, manufactured by Nippon Paper Crecia Co., Ltd.) was overlaid on a surface of the test piece, and the paper waste was coated with 3.5 g of oleic acid (CAS No. 112-80-1) and allowed to stand for 5 minutes. Next, a paper waste newly cut into a length of 50 mm and a width of 120 mm was overlaid on the paper waste of the test piece.

The test piece was allowed to stand at a center of a stainless steel pad with a lid (EBM18-8 vat with a seasoning lid, manufactured by EBEMATSU SHOJI CO., Ltd.), and the stainless pad was allowed to stand for a predetermined time in a blast air constant temperature dryer (DRS 420DA, manufactured by Advantec Toyo Kaisha, Ltd.) in which the stainless steel pad was set to a predetermined temperature (heat treatment).

After a heat treatment according to the following heat treatment conditions, the stainless steel pad was taken out from the blast air constant temperature dryer and allowed to stand at room temperature for 1 hour. Thereafter, the paper waste was removed from the test piece, and a new paper waste was pressed thereon to remove excess oleic acid. Using the thus obtained test piece after the oleic acid treatment, a surface appearance was visually observed. A sample having no abnormality in the surface appearance was evaluated to be acceptable, and a sample having an abnormality in the surface appearance (such as floating of a coating film) was evaluated to be unacceptable.

### <Heat treatment conditions>

·80°C × 30 hours
·90°C × 30 hours
·100°C × 12 hours
·100°C × 24 hours
·100°C × 30 hours

### (2) Abrasion resistance after oleic acid treatment

The test piece after the oleic acid treatment was cut into a size with a length of 50 mm and a width of 120 mm together with the mounting paper. The test piece was attached to a table of a Veslic abrasion tester (manufactured by GIULIANI TECHNOLOGIE srl) using a double-sided tape (double-sided tape for rubber, 775, manufactured by Teraoka Seisakusho Co., Ltd.). A 1.5 cm square felt (701 (model number), manufactured by Swissatest Testmaterialien AG) was attached to a tip of a friction element (1.5 cm square flat plate) using a double-sided tape (double-sided tape for rubber, 775, manufactured by Teraoka Seisakusho Co., Ltd.). In a state in which a load of 9.8 N (1000 gf) was applied to the friction element such that a surface pressure against the surface of the test piece was 444 g/cm² (4.5 N/cm²), the felt was rubbed against the test piece at a stroke of 37.5 mm and 40 times (reciprocating)/min. After rubbing 1000 times, the surface appearance of the test piece was observed. The surface appearance was evaluated according to the following evaluation criteria, and Grade 4 or higher was determined to be acceptable.

### <Evaluation criteria>

Grade 5: an abnormality (floating and tearing of a coating film) is not observed at all
Grade 4: an abnormality (floating and tearing of a coating film) is slightly observed but not conspicuous
Grade 3: an abnormality (floating and tearing of a coating film) is observed
Grade 2: an abnormality (floating and tearing of a coating film) is somewhat remarkably observed
Grade 1: an abnormality (floating and tearing of a coating film) is remarkably observed

### [Yellowing Resistance]

A test piece having a size with a width of 70 mm and a length of 200 mm was taken. The test piece was attached to a high-temperature fade meter (ultraviolet fade meter U48, manufactured by Suga Test Instruments Co., Ltd.), and a resin layer side of the test piece was irradiated for 400 hours. An irradiation range was 45 mm × 65 mm, and each test piece was irradiated at three locations. At the time, the high-temperature fade meter was set such that, carbon arc (having a luminous intensity configuration according to JIS L0842:2004) was one, a distance from the light source to the test piece was 250 mm, an internal temperature was 55°C to 65°C, a black panel temperature of a sample stand was 83 ± 3°C, a relative humidity was 30% to 50%, an arc voltage was 120 V to 145 V, a current was 15 A to 17 A, and a sample rotation speed was 3 to 4 times/min. After the irradiation, the surface appearance of the irradiated portion of the test piece was observed, and compared with an unirradiated portion of the same sample, a degree of discoloration was measured with a colorimeter based on a color difference ΔE*_{ab} by using a gray scale for discoloration and fading (JIS L0804). The surface appearance was evaluated according to the following evaluation criteria, and Grade 4 or higher was determined to be acceptable. An evaluation between numbers in JIS L0804 (for example, Nos. 3 and 4) is shown as an evaluation between grades (for example, Grades 3 and 4).

### (Evaluation criteria)

Grade 5: discoloration is about No. 5 of a standard gray color chart
Grade 4: discoloration is about No. 4 of the standard gray color chart
Grade 3: discoloration is about No. 3 of the standard gray color chart
Grade 2: discoloration is about No. 2 of the standard gray color chart
Grade 1: discoloration is about No. 1 of the standard gray color chart

### [Texture]

A sensory evaluation was performed by a panelist based on tactile feeling, and determination was made according to the following criteria. B or higher is determined to be acceptable.

### (Determination criteria)

A: the tactile feeling is soft
B: the tactile feeling is slightly rough and hard
C: the tactile feeling is rough and hard

### [Example 1]

### <Fibrous substrate>

Using an 18G circular knitting machine, a polyester processing yarn with 330 dtex/96 f was introduced as a front and connecting yarn, and a polyester processing yarn with 330 dtex/96 f was introduced as a back yarn, and a circular knitted fabric was knitted with a Mockrody structure as a knit structure. The obtained circular knitted fabric was washed with water and dried to obtain a circular knitted fabric (basis weight: 480 g/m², thickness: 1.0 mm) as a fibrous substrate.

### <Formulation 1: skin layer resin composition>

·Main agent: yellowing-resistant polycarbonate-based polyurethane resin: 100 parts by mass
   (RESAMINE CU-9450NL, solvent-based one-component type, solid content: 30% by mass, manufactured by Dainichiseika Color & Chemicals Mfg. Co., Ltd.)
·Crosslinking agent: isocyanate-based crosslinking agent (HDI-based): 5 parts by mass
   (RESAMINE NE crosslinking agent, solid content: 75% by mass, manufactured by Dainichiseika Color & Chemicals Mfg. Co., Ltd.)
·Colorant: carbon black pigment: 30 parts by mass
   (EX-GP-16-249 BLACK, solid content: 45% by mass, manufactured by Stahl Japan Ltd.)
·DMF: 45 parts by mass
   Preparation method: the viscosity was adjusted to 3,000 mPa·s (B-type viscometer, rotor: No. 4, 12 rpm, 23°C) with DMF.

### <Formulation 2: foam layer resin composition>

·Main agent: yellowing-resistant polycarbonate-based polyurethane resin: 100 parts by mass
   (HYDRAN WLI-620AR, water-based one-component type, solid content: 40% by mass, manufactured by DIC Corporation)
·Hollow fine particles: foamed microcapsules: 25 parts by mass
   (Matsumoto Microsphere FN-100S (used in foamed state by heat treatment), foamed product, average particle diameter: 50 µm, solid content: 100% by mass, powder form, outer shell: acrylonitrile-based polymer, inclusion: isopentane, manufactured by Matsumoto Yushi-Seiyaku Co., Ltd.)
·Crosslinking agent: isocyanate-based crosslinking agent (HDI-based): 1 part by mass
   (AQUADERM XL-50, solid content: 50% by mass, manufactured by LANXESS)
·Leveling agent: silicone-based leveling agent: 1 part by mass
   (AQUADERM Fluid H, solid content: 100% by mass, manufactured by LANXESS)
·Colorant: carbon black pigment: 10 parts by mass
   (EUDERM Black B-N, solid content: 25% by mass, manufactured by LANXESS)

Preparation method: the above-described agents were mixed and stirred to prepare a foam layer resin composition. The obtained foam layer resin composition had a viscosity of 5,000 mPa.s (B-type viscometer, rotor: No. 4, 12 rpm, 23°C).

### <Formulation 3: anchor coat layer resin composition>

·Main agent: yellowing-resistant polycarbonate-based polyurethane resin: 100 parts by mass
   (HYDRAN WLI-620AR, water-based one-component type, solid content: 40% by mass, manufactured by DIC Corporation)
·Crosslinking agent: isocyanate-based crosslinking agent (HDI-based): 1 part by mass
   (AQUADERM XL-50, solid content: 50% by mass, manufactured by LANXESS)
·Leveling agent: silicone-based leveling agent: 1 part by mass
   (AQUADERM Fluid H, solid content: 100% by mass, manufactured by LANXESS)
·Colorant: carbon black pigment: 10 parts by mass
   (EUDERM Black B-N, solid content: 25% by mass, manufactured by LANXESS)

Preparation method: the above-described agents were mixed and stirred to prepare an anchor coat layer resin composition. The obtained anchor coat layer resin composition had a viscosity of 5,000 mPa·s (B-type viscometer, rotor: No. 4, 12 rpm, 23°C).

### <Formulation 4: adhesive layer resin composition>

### (1) Production Example 1: polyisocyanate solution

·Polyol component: polycarbonate-based polyol: 20 parts by mass
   (ETERNACOLL UH-200, solid content: 100% by mass, manufactured by Ube Corporation)
·Diisocyanate component: XDI-based: 9.02 parts by mass
   (TAKENATE 500, solid content: 100% by mass, manufactured by Mitsui Chemicals, Inc.)

Preparation method: the above were mixed and heated to 25°C to 80°C at a temperature rising rate of 1°C/min. The mixture was stirred at 80°C for 60 minutes to complete a urethane reaction and obtain a polyisocyanate solution.

### (2) Production Example 2: polyol solution

·Main agent: polycarbonate-based polyol: 30 parts by mass
   (ETERNACOLL UH-100, solid content: 100 parts by mass, manufactured by Ube Corporation)
·Catalyst: amine catalyst: 2 parts by mass
   (TEDA-L33, solid content: 100% by mass, manufactured by Tosoh Corporation)
·Colorant: carbon black pigment: 10 parts by mass
   (EX-GP-16-249 BLACK, solid content: 45% by mass, manufactured by Stahl Japan Ltd.)
·Flame retardant: phosphorus flame retardant: 20 parts by mass
   (PEKOFLAM STC powder, solid content: 100% by mass, manufactured by Clariant Japan K.K.)
·DMF: 90 parts by mass
   Preparation method: the viscosity was adjusted to 10,000 mPa·s (B-type viscometer, rotor: No. 4, 12 rpm, 23°C) with DMF.
   (3) 29.02 parts by mass of the polyisocyanate solution in Production Example 1 and 152 parts by mass of the polyol solution in Production Example 2 were weighed, stirred, and mixed to obtain an adhesive layer resin composition containing a two-component curing type yellowing-resistant polycarbonate-based polyurethane resin.

### <Formulation 5: protective layer resin composition>

·Main agent: water-based polycarbonate-based polyurethane resin: 90 parts by mass
   (BAYDERM Finish 61UD, water-based one-component type, solid content: 35% by mass)
·Matting agent: silica-containing water-based polycarbonate-based polyurethane resin: 10 parts by mass
   (HYDRHOLAC UD-2, solid content: 25% by mass)
·Crosslinking agent: isocyanate-based crosslinking agent (HDI-based): 1 part by mass
   (AQUADERM XL-50, solid content: 50% by mass)
·Leveling agent: silicone-based leveling agent: 1 part by mass
   (AQUADERM Fluid H, solid content: 100% by mass)
·Water: 20 parts by mass
   All raw materials excluding water are manufactured by LANXESS.

Preparation method: the above-described agents were mixed and stirred to prepare a protective layer resin composition. The obtained protective layer resin composition had a viscosity of 200 mPa-s (B-type viscometer, rotor: No. 1, 12 rpm, 23°C).

### <Preparation of synthetic leather>

A release paper (ARX196M, manufactured by Asahiroll Co., Ltd.) having a grained uneven pattern was coated with the skin layer resin composition prepared according to the above-described Formulation 1 in a sheet shape by a comma coater such that a coating amount was 110 g/m², and was treated at 100°C for 3 minutes and subsequently at 130°C for 3 minutes by a dryer to form a skin layer. The obtained skin layer had a thickness of 27 µm.

Next, a surface of the skin layer formed on the release paper was coated with the foam layer resin composition prepared according to the above-described Formulation 2 in a sheet shape by the comma coater such that a coating amount was 90 g/m², and was treated at 100°C for 3 minutes by the dryer to form a foam layer. The obtained foam layer had a thickness of 120 µm.

Next, a surface of the foam layer formed on the release paper was coated with the anchor coat layer resin composition prepared according to the above-described Formulation 3 in a sheet shape by the comma coater such that a coating amount was 65 g/m², and was treated at 100°C for 3 minutes and subsequently at 130°C for 3 minutes by the dryer to form an anchor coat layer. The obtained anchor coat layer had a thickness of 22 µm.

Next, a surface of the anchor coat layer formed on the release paper was coated with the adhesive layer resin composition prepared according to the above-described Formulation 4 in a sheet shape by a knife coater such that a coating amount was 360 g/m², and was pre-dried at 80°C for 2 minutes, subsequently at 100°C for 2 minutes, and further at 130°C for 2 minutes by the dryer. Next, a polyester circular knitted fabric as the fibrous substrate was overlaid on the adhesive layer, the resultant was pressed at 120°C and 39.2 N/cm² for 1 minute by a laminator, and then the release paper was peeled off. The obtained adhesive layer had a thickness of 170 µm.

Next, the surface of the skin layer after peeling off the release paper was coated with the protective layer resin composition prepared according to the above-described Formulation 5 in a sheet shape by a reverse coater such that a coating amount was 59 g/m². The resultant was treated at 100°C for 3 minutes and subsequently at 140°C for 3 minutes by the dryer to form a protective layer having a thickness of 11 µm to obtain a synthetic leather.

Here, the thickness of each layer is a value obtained by observing a vertical cross section of the synthetic leather with a microscope (digital HF microscope VH-8000, manufactured by Keyence Corporation), measuring thicknesses at any 10 locations, and calculating an average value thereof.

### [Example 2]

A synthetic leather was obtained in the same manner as in Example 1 except that a foam layer and an anchor coat layer were not formed and a thickness of a skin layer was 30 µm.

### [Example 3]

After the skin layer was formed in Example 2, the surface of the skin layer formed on the release paper was coated with a second skin layer resin composition prepared according to the following Formulation 6 in a sheet shape by a comma coater such that a coating amount was 70 g/m². The resultant was treated at 100°C for 3 minutes and subsequently at 130°C for 3 minutes by a dryer to form a second skin layer having a layer thickness of 30 µm. A synthetic leather was obtained in the same manner as in Example 2 except for the above.

### <Formulation 6: second skin layer resin composition>

·Main agent: yellowing-resistant polycarbonate-based polyurethane resin: 100 parts by mass
   (HYDRAN WLI-620AR, water-based one-component type, solid content: 40% by mass, manufactured by DIC Corporation)
·Crosslinking agent: isocyanate-based crosslinking agent (HDI-based): 1 part by mass
   (AQUADERM XL-50, solid content: 50% by mass, manufactured by LANXESS)
·Leveling agent: silicone-based leveling agent: 1 part by mass
   (AQUADERM Fluid H, solid content: 100% by mass, manufactured by LANXESS)
·Colorant: carbon black pigment: 10 parts by mass
   (EUDERM Black B-N, solid content: 25% by mass, manufactured by LANXESS)

Preparation method: the above-described agents were mixed and stirred to prepare a second skin layer resin composition. The obtained second skin layer resin composition had a viscosity of 5,000 mPa·s (B-type viscometer, rotor: No. 4, 12 rpm, 23°C).

### [Example 4]

A synthetic leather was obtained in the same manner as in Example 1, except that the skin layer resin composition for forming the skin layer was changed to the following Formulation 7.

### <Formulation 7: skin layer resin composition>

·Main agent: yellowing-resistant polycarbonate-based polyurethane resin: 100 parts by mass
   (RESAMINE ME-8210NS, solvent-based one-component type, solid content: 30% by mass, manufactured by Dainichiseika Color & Chemicals Mfg. Co., Ltd.)
·Crosslinking agent: isocyanate-based crosslinking agent (HDI-based): 5 parts by mass
   (RESAMINE NE crosslinking agent, solid content: 75% by mass, manufactured by Dainichiseika Color & Chemicals Mfg. Co., Ltd.)
·Colorant: carbon black pigment: 24 parts by mass
   (EX-GP-16-249 BLACK, solid content: 45% by mass, manufactured by Stahl Japan Ltd.)
·DMF: 45 parts by mass
   Preparation method: the above-described agents were mixed and stirred to prepare a skin layer resin composition. The obtained skin layer resin composition had a viscosity of 3,000 mPa.s (B-type viscometer, rotor: No. 4, 12 rpm, 23°C).

### [Example 5]

A synthetic leather was obtained in the same manner as in Example 1 except that a foam layer, an anchor coat layer, and a protective layer were not formed.

### [Example 6]

A synthetic leather was obtained in the same manner as in Example 1, except that a thickness of an adhesive layer was 100 µm.

### [Example 7]

A synthetic leather was obtained in the same manner as in Example 1 except that a thickness of an adhesive layer was 200 µm.

### [Example 8]

A synthetic leather was obtained in the same manner as in Example 1 except that a thickness of a foam layer was 70 µm.

### [Example 9]

A synthetic leather was obtained in the same manner as in Example 1 except that a thickness of a foam layer was 170 µm.

### [Example 10]

A synthetic leather was obtained in the same manner as in Example 1, except that the skin layer resin composition for forming the skin layer was changed to the following Formulation 8.

### <Formulation 8: skin layer resin composition>

·Main agent: yellowing-resistant polycarbonate-based polyurethane resin: 100 parts by mass
   (RESAMINE ME-8210NS, solvent-based one-component type, solid content: 30% by mass, manufactured by Dainichiseika Color & Chemicals Mfg. Co., Ltd.)
-Crosslinking agent: isocyanate-based crosslinking agent (HDI-based): 5 parts by mass
   (RESAMINE NE crosslinking agent, solid content: 75% by mass, manufactured by Dainichiseika Color & Chemicals Mfg. Co., Ltd.)
·Colorant: carbon black pigment: 30 parts by mass
   (EX-GP-16-249 BLACK, solid content: 45% by mass, manufactured by Stahl Japan Ltd.)
·DMF: 45 parts by mass
   Preparation method: the viscosity was adjusted to 3,000 mPa·s (B-type viscometer, rotor: No. 4, 12 rpm, 23°C) with DMF.

### [Example 11]

A synthetic leather was obtained in the same manner as in Example 1, except that the adhesive layer resin composition for forming the adhesive layer was changed to the following Formulation 9.

### <Formulation 9: adhesive layer resin composition>

### (1) Production Example 3: polyisocyanate solution

-Polyol component: polycarbonate-based polyol: 20 parts by mass
   (ETERNACOLL UH-200, solid content: 100% by mass, manufactured by Ube Corporation)
-Diisocyanate component: MDI-based: 12 parts by mass
   (Millionate MT, solid content: 100% by mass, manufactured by Tosoh Corporation)

Preparation method: the above were mixed and heated to 25°C to 80°C at a temperature rising rate of 1°C/min. The mixture was stirred at 80°C for 60 minutes to complete a urethane reaction and obtain a polyisocyanate solution.
(2) 32 parts by mass of the polyisocyanate solution in Production Example 3 and 152 parts by mass of the polyol solution in Production Example 2 were weighed, stirred, and mixed to obtain an adhesive layer resin composition containing a two-component curing type yellowing polycarbonate-based polyurethane resin.

### [Example 12]

A synthetic leather was obtained in the same manner as in Example 1 except that a thickness of an adhesive layer was 20 µm.

### [Comparative Example 1]

A synthetic leather was obtained in the same manner as in Example 1 except that an anchor coat layer was not formed, and further the foam layer resin composition for forming the foam layer and the adhesive layer resin composition for forming the adhesive layer were changed to the following Formulations 10 and 11, unlike in Example 1.

### <Formulation 10: foam layer resin composition>

·Main agent: yellowing polycarbonate-based polyurethane resin: 100 parts by mass
   (LCC Binder UB-1770, water-based one-component type, solid content: 30% by mass, manufactured by LANXESS)
·Hollow fine particles: foamed microcapsules: 25 parts by mass
   (Matsumoto Microsphere FN-100S (used in foamed state by heat treatment), foamed product, average particle diameter: 50 µm, solid content: 100% by mass, powder form, outer shell: acrylonitrile-based polymer, inclusion: isopentane, manufactured by Matsumoto Yushi-Seiyaku Co., Ltd.)
·Crosslinking agent: isocyanate-based crosslinking agent: 1 part by mass
   (AQUADERM XL-50, solid content: 50% by mass, manufactured by LANXESS)
·Leveling agent: silicone-based leveling agent: 1 part by mass
   (AQUADERM Fluid H, solid content: 100% by mass, manufactured by LANXESS)
·Colorant: carbon black pigment: 10 parts by mass
   (EUDERM Black B-N, solid content: 25% by mass, manufactured by LANXESS)
·Water: 10 parts by mass
   Preparation method: the viscosity was adjusted to 5,000 mPa·s (B-type viscometer, rotor: No. 4, 12 rpm, 23°C).

### <Formulation 11: adhesive layer resin composition>

### (1) Production Example 4: polyisocyanate solution

·Polyol component: polyether-based polyol: 20 parts by mass
   (EXCENOL 2020, solid content: 100% by mass, manufactured by AGC Inc.)
·Diisocyanate component: MDI-based: 12 parts by mass
   (Millionate MT, solid content: 100% by mass, manufactured by Tosoh Corporation)

Preparation method: the above were mixed and heated to 25°C to 80°C at a temperature rising rate of 1°C/min. The mixture was stirred at 80°C for 60 minutes to complete a urethane reaction and obtain a polyisocyanate solution.

### (2) Production Example 5: polyol solution

·Main agent: polyether-based polyol: 30 parts by mass
   (EXCENOL 1020, solid content: 100 parts by mass, manufactured by AGC Inc.)
·Catalyst: amine catalyst: 2 parts by mass
   (TEDA-L33, solid content: 100% by mass, manufactured by Tosoh Corporation)
·Colorant: carbon black pigment: 10 parts by mass
   (EX-GP-16-249 BLACK, solid content: 45% by mass, manufactured by Stahl Japan Ltd.)
·Flame retardant: phosphorus flame retardant: 20 parts by mass
   (PEKOFLAM STC powder, solid content: 100% by mass, manufactured by Clariant Japan K.K.)
·DMF: 90 parts by mass
   Preparation method: the viscosity was adjusted to 10,000 mPa·s (B-type viscometer, rotor: No. 4, 12 rpm, 23°C) with DMF.
   (3) 32 parts by mass of the polyisocyanate solution in Production Example 4 and 152 parts by mass of the polyol solution in Production Example 5 were weighed, stirred, and mixed to obtain an adhesive layer resin composition containing a two-component curing type yellowing polyether-based polyurethane resin.

### [Comparative Example 2]

A synthetic leather was obtained in the same manner as in Example 1 except that a foam layer and an anchor coat layer were not formed and further the skin layer resin composition for forming the skin layer was changed to the following Formulation 12, unlike in Example 1.

### <Formulation 12: skin layer resin composition>

·Main agent: yellowing-resistant polyether-based polyurethane resin: 100 parts by mass
   (HI-MUREN Y-201B, solvent-based one-component type, solid content: 30% by mass, manufactured by Dainichiseika Color & Chemicals Mfg. Co., Ltd.)
·Crosslinking agent: isocyanate-based crosslinking agent: 5 parts by mass
   (RESAMINE NE crosslinking agent, solid content: 75% by mass, manufactured by Dainichiseika Color & Chemicals Mfg. Co., Ltd.)
·Colorant: carbon black pigment: 30 parts by mass
   (EX-GP-16-249 BLACK, solid content: 45% by mass, manufactured by Stahl Japan Ltd.)
·DMF: 45 parts by mass
   Preparation method: the above-described agents were mixed and stirred to prepare a skin layer resin composition. The obtained skin layer resin composition had a viscosity of 3,000 mPa.s (B-type viscometer, rotor: No. 4, 12 rpm, 23°C).

### [Comparative Example 3]

A synthetic leather was obtained in the same manner as in Example 1 except that a foam layer and an anchor coat layer were not formed and further the skin layer resin composition for forming the skin layer was changed to the following Formulation 13, unlike in Example 1.

### <Formulation 13: skin layer resin composition>

·Main agent: non-yellowing polycarbonate-based polyurethane resin: 100 parts by mass
   (RESAMINE NE-8850, solvent-based one-component type, solid content: 30% by mass, manufactured by Dainichiseika Color & Chemicals Mfg. Co., Ltd.)
·Crosslinking agent: isocyanate-based crosslinking agent: 5 parts by mass
   (RESAMINE NE crosslinking agent, solid content: 75% by mass, manufactured by Dainichiseika Color & Chemicals Mfg. Co., Ltd.)
·Colorant: carbon black pigment: 30 parts by mass
   (EX-GP-16-249 BLACK, solid content: 45% by mass, manufactured by Stahl Japan Ltd.)
·DMF: 45 parts by mass
   Preparation method: the above-described agents were mixed and stirred to prepare a skin layer resin composition. The obtained skin layer resin composition had a viscosity of 3,000 mPa.s (B-type viscometer, rotor: No. 4, 12 rpm, 23°C).

### [Comparative Example 4]

A synthetic leather was obtained in the same manner as in Example 1 except that a foam layer and an anchor coat layer were not formed and further the skin layer resin composition for forming the skin layer was changed to the following Formulation 14, unlike in Example 1.

### <Formulation 14: skin layer resin composition>

·Main agent: silicone-modified non-yellowing polycarbonate-based polyurethane resin: 135 parts by mass
   (RESAMINE NES-9015-22, solvent-based one-component type, solid content: 22% by mass, manufactured by Dainichiseika Color & Chemicals Mfg. Co., Ltd.)
·Crosslinking agent: isocyanate-based crosslinking agent: 5 parts by mass
   (RESAMINE NE crosslinking agent, solid content: 75% by mass, manufactured by Dainichiseika Color & Chemicals Mfg. Co., Ltd.)
·Colorant: carbon black pigment: 30 parts by mass
   (EX-GP-16-249 BLACK, solid content: 45% by mass, manufactured by Stahl Japan Ltd.)
·DMF: 45 parts by mass
   Preparation method: the above-described agents were mixed and stirred to prepare a skin layer resin composition. The obtained skin layer resin composition had a viscosity of 3,000 mPa.s (B-type viscometer, rotor: No. 4, 12 rpm, 23°C).

The surface color (L* in the L*a*b* color system) of the synthetic leather obtained in the above-described Examples and Comparative Examples was measured, and the oleic acid resistance and the yellowing resistance were evaluated. Results are shown in Tables 1 to 3.

**[Table 1]**

| | | Exp. 1 | Exp. 2 | Exp. 3 | Exp. 4 | Exp. 5 | Exp. 6 |
|---|---|---|---|---|---|---|---|
| Fibrous substrate | Thickness (mm) | 1.0 | 1.0 | 1.0 | 1.0 | 1.0 | 1.0 |
| Protective layer | Polyurethane resin | PC | PC | PC | PC | - | PC |
| | | WB 1 Compo | WB 1 Compo | WB 1 Compo | WB 1 Compo | - | WB 1 Compo |
| | Thickness (µm) | 11 | 11 | 11 | 11 | - | 11 |
| Skin layer (first) | Polyurethane resin | Yellowing-resistant | Yellowing-resistant | Yellowing-resistant | Yellowing-resistant | Yellowing-resistant | Yellowing-resistant |
| | | PC | PC | PC | PC | PC | PC |
| | | SB 1 Compo | SB 1 Compo | SB 1 Compo | SB 1 Compo | SB 1 Compo | SB 1 Compo |
| | Colorant (%) | 29 | 29 | 29 | 24 | 29 | 29 |
| | Crosslinking agent (%) | 8 | 8 | 8 | 8 | 8 | 8 |
| | Thickness (µm) | 27 | 30 | 30 | 27 | 27 | 27 |
| Skin layer (second) | Polyurethane resin | - | - | Yellowing-resistant | - | - | - |
| | | - | - | PC | - | - | - |
| | | - | - | WB 1 Compo | - | - | - |
| | Colorant (%) | - | - | 6 | - | - | - |
| | Crosslinking agent (%) | - | - | 1 | - | - | - |
| | Thickness (µm) | - | - | 30 | - | - | - |
| Skin layer total thickness (µm) | | 27 | 30 | 60 | 27 | 27 | 27 |
| Foam layer | Polyurethane resin | Yellowing-resistant | - | - | Yellowing-resistant | - | Yellowing-resistant |
| | | PC | - | - | PC | - | PC |
| | | WB 1 Compo | - | - | WB 1 Compo | - | WB 1 Compo |
| | Thickness (µm) | 120 | - | - | 120 | - | 120 |
| Anchor coat layer | Polyurethane resin | Yellowing-resistant | - | - | Yellowing-resistant | - | Yellowing-resistant |
| | | PC | - | - | PC | - | PC |
| | | WB 1 Compo | - | - | WB 1 Compo | - | WB 1 Compo |
| | Thickness (µm) | 22 | - | - | 22 | - | 22 |
| Adhesive layer | Polyurethane resin | Yellowing-resistant | Yellowing-resistant | Yellowing-resistant | Yellowing-resistant | Yellowing-resistant | Yellowing-resistant |
| | | PC | PC | PC | PC | PC | PC |
| | | SB 2 Compo | SB 2 Compo | SB 2 Compo | SB 2 Compo | SB 2 Compo | SB 2 Compo |
| | Thickness (µm) | 170 | 170 | 170 | 170 | 170 | 100 |
| Surface color L* value | | 24.5 | 24.5 | 24.5 | 28.0 | 26.0 | 24.5 |
| Oleic acid resistance Appearanc e change | 80°C × 30 hr | Acceptable | Acceptable | Acceptable | Acceptable | Acceptable | Acceptable |
| | 90°C × 30 hr | Acceptable | Acceptable | Acceptable | Acceptable | Acceptable | Acceptable |
| | 100°C × 12 hr | Acceptable | Acceptable | Acceptable | Acceptable | Acceptable | Acceptable |
| | 100°C × 24 hr | Acceptable | Unacceptable | Acceptable | Acceptable | Unacceptable | Acceptable |
| | 100°C × 30 hr | Acceptable | Unacceptable | Acceptable | Acceptable | Unacceptable | Acceptable |
| Oleic acid resistance Abrasion resistance | 80°C × 30 hr | Grade 4 | Grade 4 | Grade 4 | Grade 4 | Grade 4 | Grade 4 |
| | 90°C × 30 hr | Grade 4 | Grade 4 | Grade 4 | Grade 4 | Grade 4 | Grade 4 |
| | 100°C × 12 hr | Grade 4 | Grade 4 | Grade 4 | Grade 4 | Grade 4 | Grade 4 |
| | 100°C × 24 hr | Grade 4 | Grade 2 | Grade 4 | Grade 4 | Grade 2 | Grade 4 |
| | 100°C × 30 hr | Grade 4 | Grade 1 | Grade 4 | Grade 4 | Grade 1 | Grade 4 |
| Yellowing resistance | | Grade 5 | Grade 5 | Grade 5 | Grade 3 | Grade 5 | Grade 5 |
| Texture | | A | A | A | A | A | B |

| | | | | | | | |
|---|---|---|---|---|---|---|---|
| (PC: polycarbonate-based, WB 1 Compo: water-based one-component type, SB 1 Compo: solvent-based one-component type, SB 2 Compo: solvent-based two-component curing type) | | | | | | | |

**[Table 2]**

| | | Exp. 7 | Exp. 8 | Exp. 9 | Exp. 10 | Exp. 11 | Exp. 12 |
|---|---|---|---|---|---|---|---|
| Fibrous substrate | Thickness (mm) | 1.0 | 1.0 | 1.0 | 1.0 | 1.0 | 1.0 |
| Protective layer | Polyurethane resin | PC | PC | PC | PC | PC | PC |
| | | WB 1 Compo | WB 1 Compo | WB 1 Compo | WB 1 Compo | WB 1 Compo | WB 1 Compo |
| | Thickness (µm) | 11 | 11 | 11 | 11 | 11 | 11 |
| Skin layer (first) | Polyurethane resin | Yellowing-resistant | Yellowing-resistant | Yellowing-resistant | Yellowing-resistant | Yellowing-resistant | Yellowing-resistant |
| | | PC | PC | PC | PC | PC | PC |
| | | SB 1 Compo | SB 1 Compo | SB 1 Compo | SB 1 Compo | SB 1 Compo | SB 1 Compo |
| | Colorant (%) | 29 | 29 | 29 | 29 | 29 | 29 |
| | Crosslinking agent (%) | 8 | 8 | 8 | 8 | 8 | 8 |
| | Thickness (µm) | 27 | 27 | 27 | 27 | 27 | 27 |
| Skin layer (second) | Polyurethane resin | | | | | | |
| | | | | | | | |
| | | | | | | | |
| | Colorant (%) | | | | | | |
| | Crosslinking agent (%) | | | | | | - |
| | Thickness (µm) | - | - | - | - | | - |
| Skin layer total Thickness (µm) | | 27 | 27 | 27 | 27 | 27 | 27 |
| Foam layer | Polyurethane resin | Yellowing-resistant | Yellowing-resistant | Yellowing-resistant | Yellowing-resistant | Yellowing-resistant | Yellowing-resistant |
| | | PC | PC | PC | PC | PC | PC |
| | | WB 1 Compo | WB 1 Compo | WB 1 Compo | WB 1 Compo | WB 1 Compo | WB 1 Compo |
| | Thickness (µm) | 120 | 70 | 170 | 120 | 120 | 120 |
| Anchor coat layer | Polyurethane resin | Yellowing-resistant | Yellowing-resistant | Yellowing-resistant | Yellowing-resistant | Yellowing-resistant | Yellowing-resistant |
| | | PC | PC | PC | PC | PC | PC |
| | | WB 1 Compo | WB 1 Compo | WB 1 Compo | WB 1 Compo | WB 1 Compo | WB 1 Compo |
| | Thickness (µm) | 22 | 22 | 22 | 22 | 22 | 22 |
| Adhesive layer | Polyurethane resin | Yellowing-resistant | Yellowing-resistant | Yellowing-resistant | Yellowing-resistant | Yellowing | Yellowing-resistant |
| | | PC | PC | PC | PC | PC | PC |
| | | SB 2 Compo | SB 2 Compo | SB 2 Compo | SB 2 Compo | SB 2 Compo | SB 2 Compo |
| | Thickness (µm) | 200 | 170 | 170 | 170 | 170 | 20 |
| Surface color L* value | | 24.5 | 24.5 | 24.5 | 24.5 | 24.5 | 24.5 |
| Oleic acid resistance Appearanc e change | 80°C × 30 hr | Acceptable | Acceptable | Acceptable | Acceptable | Acceptable | Acceptable |
| | 90°C × 30 hr | Acceptable | Acceptable | Acceptable | Acceptable | Acceptable | Acceptable |
| | 100°C × 12 hr | Acceptable | Acceptable | Acceptable | Acceptable | Acceptable | Acceptable |
| | 100°C × 24 hr | Acceptable | Acceptable | Acceptable | Acceptable | Acceptable | Acceptable |
| | 100°C × 30 hr | Acceptable | Acceptable | Acceptable | Acceptable | Acceptable | Acceptable |
| Oleic acid resistance Abrasion resistance | 80°C × 30 hr | Grade 4 | Grade 4 | Grade 4 | Grade 4 | Grade 4 | Grade 4 |
| | 90°C × 30 hr | Grade 4 | Grade 4 | Grade 4 | Grade 4 | Grade 4 | Grade 4 |
| | 100°C × 12 hr | Grade 4 | Grade 4 | Grade 4 | Grade 4 | Grade 4 | Grade 4 |
| | 100°C × 24 hr | Grade 4 | Grade 4 | Grade 4 | Grade 4 | Grade 4 | Grade 4 |
| | 100°C × 30 hr | Grade 4 | Grade 4 | Grade 4 | Grade 4 | Grade 4 | Grade 4 |
| Yellowing resistance | | Grade 5 | Grade 5 | Grade 5 | Grade 5 | Grade 5 | Grade 5 |
| Texture | | A | A | A | A | A | C |

| | | | | | | | |
|---|---|---|---|---|---|---|---|
| (PC: polycarbonate-based, WB 2 Compo: water-based one-component type, SB 1 Compo: solvent-based one-component type, SB 2 Compo: solvent-based two-component curing type) | | | | | | | |

**[Table 3]**

| | | | Comp. Exp. 1 | Comp. Exp. 2 | Comp. Exp. 3 | Comp. Exp. 4 |
|---|---|---|---|---|---|---|
| Fibrous substrate | Thickness (mm) | | 1.0 | 1.0 | 1.0 | 1.0 |
| Protective layer | Polyurethane resin | | PC | PC | PC | PC |
| | | | WB 1 Compo | WB 1 Compo | WB 1 Compo | WB 1 Compo |
| | Thickness (µm) | | 11 | 11 | 11 | 11 |
| Skin layer (first) | Polyurethane resin | | Yellowing-resistant | Yellowing-resistant | Non-yellowing | Si non-yellowing |
| | | | PC | PEt | PC | PC |
| | | | SB 1 Compo | SB 1 Compo | SB 1 Compo | SB 1 Compo |
| | Amount of colorant (%) | | 29 | 29 | 29 | 29 |
| | Amount of crosslinking agent (%) | | 8 | 8 | 8 | 8 |
| | Thickness (µm) | | 27 | 27 | 27 | 27 |
| Skin layer (second) | Polyurethane resin | | | | | |
| | | | - | - | - | - |
| | | | - | - | - | - |
| | Colorant (%) | | - | - | - | - |
| | Crosslinking agent (%) | | - | - | - | - |
| | Thickness (µm) | | - | - | - | - |
| Skin layer total thickness (µm) | | | 27 | 27 | 27 | 27 |
| Foam layer | Polyurethane resin | | Yellowing | - | - | - |
| | | | PC | - | - | - |
| | | | WB 1 Compo | - | - | - |
| | Thickness (µm) | | 120 | - | - | - |
| Anchor coat layer | Polyurethane resin | | | | | |
| | | | | | | |
| | | | | | | |
| | Thickness (µm) | | - | - | - | - |
| Adhesive layer | Polyurethane resin | | Yellowing | Yellowing-resistant | Yellowing-resistant | Yellowing-resistant |
| | | | PEt | PC | PC | PC |
| | | | SB 2 Compo | SB 2 Compo | SB 2 Compo | SB 2 Compo |
| | Thickness (µm) | | 170 | 170 | 170 | 170 |
| Surface color L* value | | | 24.5 | 24.5 | 24.5 | 24.5 |
| Oleic acid resistance Appearance change | | 80°C × 30 hr | Acceptable | Unacceptable | Unacceptable | Unacceptable |
| | | 90°C × 30 hr | Unacceptable | Unacceptable | Unacceptable | Unacceptable |
| | | 100°C × 12 hr | Unacceptable | Unacceptable | Unacceptable | Unacceptable |
| | | 100°C × 24 hr | Unacceptable | Unacceptable | Unacceptable | Unacceptable |
| | | 100°C × 30 hr | Unacceptable | Unacceptable | Unacceptable | Unacceptable |
| Oleic acid resistance Abrasion resistance | | 80°C × 30 hr | Grade 1 | Grade 1 | Grade 1 | Grade 1 |
| | | 90°C × 30 hr | Grade 1 | Grade 1 | Grade 1 | Grade 1 |
| | | 100°C × 12 hr | Grade 1 | Grade 1 | Grade 1 | Grade 1 |
| | | 100°C × 24 hr | Grade 1 | Grade 1 | Grade 1 | Grade 1 |
| | | 100°C × 30 hr | Grade 1 | Grade 1 | Grade 1 | Grade 1 |
| Yellowing resistance | | | Grade 5 | Grade 5 | Grade 5 | Grade 5 |
| Texture | | | A | A | A | A |

| | | | | | | |
|---|---|---|---|---|---|---|
| (PC: polycarbonate-based, PEt: polyether-based, Si non-yellowing: silicone-modified non-yellowing, WB 1 Compo: water-based one-component type, SB 1 Compo: solvent-based one-component type, SB 2 Compo: solvent-based two-component curing type) | | | | | | |

As shown in Table 3, in Comparative Example 1, the yellowing polyether-based polyurethane resin was used for the adhesive layer, and thus the oleic acid resistance was poor. Since the polyether-based polyurethane resin was used for the skin layer in Comparative Example 2, the non-yellowing polyurethane resin was used for the skin layer in Comparative Example 3, and the silicone-modified non-yellowing polyurethane resin was used for the skin layer in Comparative Example 4, in any case, the oleic acid resistance was further inferior to that of Comparative Example 1.

In contrast, as shown in Tables 1 and 2, in Examples 1 to 12, the oleic acid resistance was excellent, and in particular, in Examples 1, 3, 4, and 6 to 12, the appearance change regarding the oleic acid resistance was also acceptable, the abrasion resistance was also Grade 4, and the oleic acid resistance was excellent even under the heat treatment condition of 100°C × 30 hours. In addition, in Examples 1 to 3 and 5 to 12, the surface color L* was 27 or less, and the yellowing resistance was excellent even though a non-yellowing polyurethane resin was not used.

Hereinafter, some embodiments will be listed, but the invention is not limited thereto.
[1] A synthetic leather including: a fibrous substrate; an adhesive layer containing a yellowing-resistant polycarbonate-based polyurethane resin and/or a yellowing polycarbonate-based polyurethane resin; and a skin layer that contains a yellowing-resistant polycarbonate-based polyurethane resin and that is laminated on the fibrous substrate via the adhesive layer.
[2] The synthetic leather according to [1], further including: a protective layer laminated on the skin layer.
[3] The synthetic leather according to [2], in which the protective layer contains a polycarbonate-based polyurethane resin.
[4] The synthetic leather according to [2] or [3], in which the protective layer contains a matting agent, and a content of the matting agent in the protective layer is 3% by mass to 40% by mass.
[5] The synthetic leather according to any one of [1] to [4], further including: a foam layer containing a polycarbonate-based polyurethane resin between the skin layer and the adhesive layer.
[6] The synthetic leather according to [5], in which the foam layer contains a yellowing-resistant polycarbonate-based polyurethane resin.
[7] The synthetic leather according to [5] or [6], in which a thickness of the adhesive layer is larger than a thickness of the foam layer.
[8] The synthetic leather according to any one of [5] to [7], further including: an anchor coat layer containing a polycarbonate-based polyurethane resin between the foam layer and the adhesive layer.
[9] The synthetic leather according to [8], in which the anchor coat layer contains a yellowing-resistant polycarbonate-based polyurethane resin.
[10] The synthetic leather according to [8] or [9], in which the thickness of the adhesive layer is larger than a thickness of the anchor coat layer.
[11] The synthetic leather according to any one of [1] to [10], in which the thickness of the adhesive layer is larger than a thickness of the skin layer.
[12] The synthetic leather according to any one of [1] to [11], in which the yellowing-resistant polycarbonate-based polyurethane resin contained in the adhesive layer and/or the skin layer is (A1) one obtained by a reaction of a polycarbonate polyol component with a yellowing-resistant polyisocyanate component, or is (A2) one obtained by a reaction of a polycarbonate polyol with a yellowing polyisocyanate component and containing an ultraviolet absorbing agent and/or a light stabilizer.
[13] The synthetic leather according to [12], in which the yellowing-resistant polyisocyanate component is an araliphatic polyisocyanate, and preferably XDI and/or TMXDI.
[14] The synthetic leather according to any one of [1] to [13], in which the yellowing polycarbonate-based polyurethane resin contained in the adhesive layer is (B) one obtained by a reaction of a polycarbonate polyol component with a yellowing polyisocyanate component and containing no ultraviolet absorbing agent and/or light stabilizer.
[15] The synthetic leather according to any one of [12] to [14], in which the yellowing polyisocyanate component is an aromatic polyisocyanate, and preferably at least one selected from the group consisting of phenylene diisocyanate, TDI, MDI, and naphthalene diisocyanate.
[16] The synthetic leather according to any one of [1] to [15], in which 60% by mass or more, more preferably 80% by mass or more of a resin forming the skin layer is the yellowing-resistant polycarbonate-based polyurethane resin.
[17] The synthetic leather according to any one of [1] to [16], in which the skin layer has a crosslinked structure formed of an isocyanate-based crosslinking agent, and a content of the isocyanate-based crosslinking agent in the skin layer is 0.1% by mass to 15% by mass, more preferably 1% by mass to 10% by mass, and still more preferably 3% by mass to 10% by mass.
[18] The synthetic leather according to any one of [1] to [17], in which the skin layer contains a colorant, and a content of the colorant in the skin layer is 20% by mass to 38% by mass, more preferably 25% by mass to 35% by mass, and still more preferably 28% by mass to 32% by mass.
[19] The synthetic leather according to any one of [1] to [18], in which 60% by mass or more, more preferably 80% by mass or more of a resin forming the adhesive layer is the yellowing-resistant polycarbonate-based polyurethane resin and/or the yellowing polycarbonate-based polyurethane resin.
[20] The synthetic leather according to any one of [1] to [19], in which the synthetic leather has a surface color in which L* in a L*a*b* color system is 27 or less.

### Reference Signs List

1, 10, 100: synthetic leather
2: fibrous substrate
3: adhesive layer
4: skin layer
5: anchor coat layer
6: foam layer
7: protective layer

## Claims

1. A synthetic leather comprising:
a fibrous substrate;
an adhesive layer containing a yellowing-resistant polycarbonate-based polyurethane resin and/or a yellowing polycarbonate-based polyurethane resin; and
a skin layer that contains a yellowing-resistant polycarbonate-based polyurethane resin and that is laminated on the fibrous substrate via the adhesive layer.

2. The synthetic leather according to claim 1, further comprising:
a protective layer laminated on the skin layer.

3. The synthetic leather according to claim 1 or 2, further comprising:
a foam layer containing a polycarbonate-based polyurethane resin between the skin layer and the adhesive layer.

4. The synthetic leather according to claim 3, wherein
the foam layer contains a yellowing-resistant polycarbonate-based polyurethane resin.

5. The synthetic leather according to claim 3 or 4, wherein
a thickness of the adhesive layer is larger than a thickness of the foam layer.

6. The synthetic leather according to claim 3, further comprising:
an anchor coat layer containing a polycarbonate-based polyurethane resin between the foam layer and the adhesive layer.

7. The synthetic leather according to claim 6, wherein
the anchor coat layer contains a yellowing-resistant polycarbonate-based polyurethane resin.

8. The synthetic leather according to any one of claims 1 to 7, wherein
the thickness of the adhesive layer is larger than a thickness of the skin layer.

9. The synthetic leather according to any one of claims 1 to 8, wherein
the yellowing-resistant polycarbonate-based polyurethane resin is (A1) one obtained by a reaction of a polycarbonate polyol component with a yellowing-resistant polyisocyanate component, or is (A2) one obtained by a reaction of a polycarbonate polyol with a yellowing polyisocyanate component and containing an ultraviolet absorbing agent and/or a light stabilizer, and
the yellowing polycarbonate-based polyurethane resin is (B) one obtained by a reaction of a polycarbonate polyol component with a yellowing polyisocyanate component and containing no ultraviolet absorbing agent and/or light stabilizer.

10. The synthetic leather according to any one of claims 1 to 9, wherein
the synthetic leather has a surface color in which L* in a L*a*b* color system is 27 or less.
